# EUROPEAN PATENT APPLICATION

(11) **EP 4 621 401 A1**
(43) Date of publication of application: **24.09.2025**
(21) Application number: 24164538.1
(22) Date of filing: 19.03.2024
(51) Int. Cl.: G01N 27/414

(54) **METHOD AND DEVICE FOR CONTROLLING A FET**

(71) Applicant: Melexis Technologies NV, 3980 Tessenderlo-Ham (BE)
(72) Inventor: PIETTE, Francois, 3980 Tessenderlo (BE); FANGET, Axel, 2022 Bevaix (CH); BUI, Thanh Giang, 2022 Bevaix (CH); DE LOCHT, Cliff, 3980 Tessenderlo (BE); OTT, Andreas, 99099 Erfurt (DE); LOMAKIN, Levgen, 2022 Bevaix (CH)
(74) Representative: Winger

(57) **Abstract**

The present invention relates to a gate driver system (100) for driving a gate (112) of a field-effect transistor (110) in contact with a liquid. The system (100) includes the field-effect transistor with a gate (112), source (111), and drain (113) for biasing. It features a first drive electrode (120) for applying a driving signal to achieve a voltage at the gate. A first sense electrode (130) is used for measuring the gate voltage, providing a first feedback signal indicative of this voltage. The first drive electrode and/or the second drive electrode is an on-chip metal electrode. A feedback control system (140) is incorporated to regulate the gate voltage by controlling the first drive electrode using the first feedback signal. This system (100) is designed to ensure precise control of the gate voltage.

## Description

### Field of the Invention

The present invention relates to the field of controlling field-effect transistors (FETs). More specifically it relates to a method and a device for regulating the gate voltage of a FET interfaced with microfluidic environments.

### Background of the Invention

The field of bio-sensing has seen significant advancements in recent years, particularly with the integration of microfluidic technology and electronic sensing elements. In this domain, the ability to detect and quantify the presence of various substances within a liquid medium is of paramount importance. These substances can range from simple ions to complex biomolecules, and their detection is crucial in a wide array of applications, including life sciences research, medical diagnostics, environmental monitoring, and more.

One of the challenges in the field is the detection of very low concentrations of substances within a fluidic cell. The fluidic cell typically contains the liquid sample along with the sensing element, which must interact with the target substances to provide a measurable response. The sensing elements, often based on electronic components such as field-effect transistors (FETs), must be highly sensitive and capable of providing rapid feedback to be useful in time-sensitive applications.

The use of FETs, including graphene field-effect transistors (GFETs), has been explored due to their high sensitivity and the potential for miniaturization. These transistors operate by modulating electrical signals in response to changes in their environment, such as the presence of specific substances that bind to their sensitive layers. However, the operation of these devices in a fluidic environment introduces several challenges.

One of the primary issues is the establishment of a stable and reliable reference potential within the fluidic cell. The liquid medium can interact with the electrodes, leading to potential drifts due to chemical reactions. This instability can significantly affect the accuracy and reliability of the sensing system. To address this, reference electrodes made of chemically stable materials, such as silver/silver chloride (Ag/AgCI), are often used. These electrodes are designed to maintain a stable potential but introduce additional complexities due to their intrinsic resistances and capacitances.

Moreover, the liquid itself, along with the construction of the GFET, contributes additional resistances and capacitances, resulting in a high time constant for the sensing system. This high time constant limits the speed at which the system can respond to changes, which is a significant drawback for applications requiring rapid detection and analysis.

Despite the progress made in the field there remains a need for further advancements. The existing solutions still face limitations in terms of the speed and stability of the sensing system, particularly when dealing with the complex interplay of resistances, capacitances, and the need for a stable reference potential.

In summary, while the field of bio-sensing has made strides in integrating electronic sensing elements with microfluidic technology, there is an ongoing need for improvements in the stability, speed, and reliability of these systems. Addressing these challenges is crucial for the advancement of bio-sensing applications across various disciplines.

### Summary of the Invention

It is an object of embodiments of the present invention to enable fast and stable voltage regulation at the gate of a field-effect transistor in contact with a liquid. This objective is accomplished by a gate driver system or method for driving a gate of a field-effect transistor in contact with a liquid according to the invention. This may for example be advantageous for improved biosensing performance or chemical sensitivity.

In a first aspect embodiments of the present invention relate to a gate driver system for driving a gate of a field-effect transistor in contact with a liquid, the gate driver system comprising: the field-effect transistor, wherein the field-effect transistor comprises the gate, and a source and a drain for biasing the field-effect transistor, a first drive electrode configured for applying a first driving signal to obtain a voltage at the gate, a first sense electrode configured for measuring the voltage at the gate thereby obtaining a first feedback signal indicative of the voltage at the gate, a feedback control system for regulating the voltage at the gate by controlling the first drive electrode using the first feedback signal. The first drive electrode or the first sense electrode is an on-chip metal electrode. It is an advantage of embodiments of the present invention that the maximum frequency limit for gate-source voltage modulation is increased by providing an on-chip metal electrode for the first drive electrode and/or for the first sense electrode in comparison with a system where only reference electrodes are used for the first drive electrode and the first sense electrode.

In embodiments of the present invention, the first drive electrode is an on-chip metal electrode and the gate driver system may comprise a second drive electrode configured for applying a second drive signal to obtain a voltage at the gate, wherein the second drive electrode is a reference electrode and wherein the feedback control system is configured for also controlling the second drive electrode for regulating the voltage at the gate. This embodiment provides the advantage of enabling more precise control of the gate voltage by utilizing both an on-chip metal electrode and a reference electrode for driving the gate voltage. It is thereby advantageous that the reference electrode is less prone to drift than the on-chip metal electrode.

In embodiments, the gate driver system may comprise a second sense electrode, configured for measuring the voltage at the gate thereby obtaining a second feedback signal indicative of the voltage at the gate, wherein the feedback control system is configured for also using the second feedback signal for regulating the voltage at the gate. It is an advantage of embodiments of the present invention that the feedback accuracy for the regulation of the gate voltage is improved by incorporating a second sense electrode.

In embodiments, the first sense electrode or the second sense electrode may be an on-chip metal electrode. It is an advantage of embodiments of the present invention that a more integrated gate driver system is obtained which has a potentially faster response time for sensing the gate voltage. It is, moreover, an advantage of embodiments of the present invention that the on-chip metal electrodes are compatible with a CMOS process allowing a further integration.

In embodiments, the first sense electrode or the second sense electrode may be a reference electrode. It is an advantage of embodiments of the present invention that a stable reference for sensing the gate voltage is used.

In embodiments, one or more of the reference electrodes may be an Ag/AgCI electrode. It is an advantage of embodiments of the present invention that a well-established and chemically stable reference electrode material is used.

In embodiments of the present invention the FET may be a chemical field-effect transistor (ChemFET). In embodiments of the present invention the FET may be an ion sensitive field-effect transistor (ISFET).

In embodiments of the present invention, the field-effect transistor may be a graphene field-effect transistor (GFET). It is an advantage of embodiments of the present invention that the unique properties of graphene for sensitive and responsive gate control in the field-effect transistor are used.

In a second aspect embodiments of the present invention relate to a biosensing system for detecting a substance in a fluid, the biosensing system comprising a gate driver system according to any embodiments of the first aspect, wherein the gate of the field-effect transistor is sensitive to the substance, and wherein the biosensing system comprises a control device which is configured for regulating the voltage at the gate of the field-effect transistor using the gate driver system and which is configured for determining a characteristic of the field-effect transistor for detecting the substance.

In a third aspect embodiments of the present invention relate to a method for driving and regulating a gate voltage of a field-effect transistor in contact with a liquid, the method comprising: applying a first driving signal to obtain a voltage at the gate of the field-effect transistor using a first drive electrode, measuring the voltage at the gate with a first sense electrode to obtain a first feedback signal indicative of the voltage at the gate, wherein the applied voltage is regulated using a feedback control system based on the first feedback signal. The first drive electrode and/or the first sense electrode is an on-chip metal electrode.

In embodiments of the present invention the method may include using a second drive electrode for applying a second drive signal to obtain a voltage at the gate wherein the first drive electrode is an on-chip metal electrode and the second drive electrode is a reference electrode. It is advantage of embodiments of the present invention that dual driving signals are provided for more precise gate voltage control.

In embodiments, the method of measuring the voltage at the gate may include using a second sense electrode to obtain a second feedback signal indicative of the voltage at the gate, wherein the applied voltage is regulated using the feedback control system based on the first feedback signal and/or on the second feedback signal. It is an advantage of embodiments of the present invention that enhanced feedback is provided for more accurate voltage regulation.

In embodiments, the first sense electrode or the second sense electrode may be an on-chip metal electrode. It is an advantage of embodiments of the present invention that a more integrated approach to sensing the gate voltage is provided.

In embodiments, the first sense electrode or the second sense electrode may be a reference electrode. It is an advantage of embodiments of the present invention that a stable reference for sensing the gate voltage is provided.

In embodiments, the applied first driving signal and/or second driving signal may be modulated. It is an advantage of embodiments of the present invention that modulation of the driving signals for potentially improved characterization of the FET is provided.

It is an advantage of embodiments of the present invention that a gate driver system can be provided which allows for rapid modulation of the gate-source voltage of a field-effect transistor (FET), such as a graphene field-effect transistor (GFET), in contact with a liquid. It is a further advantage of embodiments of the present invention that the gate voltage can be precisely controlled using a combination of on-chip metal electrodes and reference electrodes, such as Ag/AgCI electrodes, which can be beneficial for bio-sensing applications where the detection of low concentrations of substances is critical. It is yet another advantage of embodiments of the present invention that the time constant of the sensing system can be reduced, allowing for higher frequency feedback and better sensing loop stability, which is particularly advantageous in life science and medical applications where rapid detection is essential.

It is an advantage of embodiments of the present invention that the use of on-chip metal electrodes for applying the gate voltage to the FET can lead to a reduction in the overall resistance and parasitic capacitances, which in turn can increase the maximum frequency limit for gate-source voltage modulation. It is a further advantage of embodiments of the present invention that the feedback control system can actively drive the gate voltage using one or more force electrodes based on the input of one or more sense electrodes, providing a higher frequency feedback path and improving the stability of the sensing loop. It is a further advantage of embodiments of the present invention that CMOS integration is enhanced by the use of on-chip metal electrodes. Driving and sensing may be performed by using circuit elements arranged in a CMOS semiconductor technology.

It is an advantage of embodiments of the present invention that the simultaneous driving of the reference electrode and the on-chip metal electrode can significantly increase the modulation frequency, potentially by a factor of 5 to 10, which is beneficial for faster readout times of the GFET-based biosensor.

The arrangement of electrodes can be detected optically, and the employed force and sense method can be inspected using an oscilloscope, facilitating the detection of the use of the patented solution by others.

It is an advantage of embodiments of the present invention that the biosensing system can detect substances in a fluid with high sensitivity and speed. The biosensing system may therefore comprise a control device configured for regulating the voltage at the gate of the FET using the gate driver system and for determining a characteristic of the FET for detecting the substance. The control device may be arranged in CMOS semiconductor technology. It is a further advantage of embodiments of the present invention that the method for driving and regulating a gate voltage of a FET in contact with a liquid can include the steps of applying a driving signal using on-chip metal electrodes, measuring the voltage at the gate to obtain feedback signals, and regulating the applied voltage using a feedback control system based on these signals, thereby achieving precise control over the gate voltage for enhanced sensing capabilities.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 is a schematic drawing of a prior art gate driver system wherein the liquid gate voltage of a FET is controlled using an external reference electrode.
FIG. 2 is an electric circuit which serves as a model of a reference electrode which may be used in a gate driver system according to embodiments of the present invention.
FIG. 3 is a schematic drawing of a gate driver system comprising a first drive electrode which is an on-chip metal electrode and a first sense electrode which is an on-chip metal electrode according to embodiments of the present invention.
FIG. 4 is an electric circuit which serves as a model of an on-chip metal electrode used in a gate driver system according to embodiments of the present invention.
FIG. 5 is a schematic drawing of a gate driver system comprising a first drive electrode which is an on-chip metal electrode, a second drive electrode which is a reference electrode, and a first sense electrode which is a reference electrode according to embodiments of the present invention.
FIG. 6 is a schematic drawing of a gate driver system comprising a first drive electrode which is a reference electrode, a first sense electrode which is an on-chip metal electrode, and a second sense electrode which is a reference electrode according to embodiments of the present invention.
FIG. 7 is a schematic drawing of a gate driver system comprising a first drive electrode which is an on-chip metal electrode, a second drive electrode which is a reference electrode, a first sense electrode which is an on-chip metal electrode, and a second sense electrode which is a reference electrode according to embodiments of the present invention.
FIG. 8 is a biosensing system according to embodiments of the present invention.
FIG. 9 is a simulation model of a gate driver system comprising an array of 256 GFETs with distributed on-chip gate electrodes according to embodiments of the present invention.
FIG. 10 shows the simulation results of various gate driving systems according to embodiments of the present invention.
FIG. 11 shows an exemplary flow chart of a method in accordance with embodiments of the present invention.

In the different figures, the same reference signs refer to the same or analogous elements.

### Detailed description of Illustrative Embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top and over and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of", is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "gate driver system" refers to an assembly of components designed to control the voltage level at the gate terminal of a field-effect transistor (FET), which is a specific type of transistor that uses an electric field to control the flow of current. The gate driver system includes the necessary circuitry and connections to apply driving signals, measure feedback signals, and adjust the driving signals based on the feedback to maintain desired gate voltage levels. Examples of specific embodiments of a gate driver system may include systems with various types of FETs such as graphene field-effect transistors (GFETs), and may be used in biosensing applications or for detecting chemical substances.

As used herein, and unless otherwise specified, the term "field-effect transistor (FET)" refers to a semiconductor device that controls current flow through a channel using an electric field induced by a voltage applied to its gate terminal. The FET includes three main terminals: the gate, the source, and the drain. The source and drain are the terminals through which current enters and exits the transistor, respectively, and the gate is the control terminal that modulates the current flow through the channel between the source and drain. In embodiments of the present invention the gate is in contact with a liquid, meaning that it is in electrical contact with the liquid (e.g. through an ohmic or a capacitive coupling or a combination of both). Examples of specific embodiments of FETs include but are not limited to MOSFETs, JFETs, and GFETs, with variations such as enhancement-mode or depletion-mode types, and they may be constructed from materials like silicon, gallium arsenide, or graphene. ChemFETs or ISFETs may be used.

As used herein, and unless otherwise specified, the term "on-chip metal electrode" refers to a conductive metal structure that is fabricated as part of an integrated circuit (IC) on a semiconductor chip. Examples of specific embodiments of on-chip metal electrodes include aluminum, copper, palladium, nickel, platinum, gold that are patterned during the semiconductor manufacturing process to form part of the circuitry on a silicon, gallium arsenide, or other semiconductor material-based chip. Also combinations of these metals may be used (e.g. nickel/palladium/gold). The on-chip metal electrode which is used as drive electrode or as sense electrode is in contact with the liquid of the gate driver system. They may be positioned on the chip. In an embodiment they are near to the FET to be measured. They may for example be neighboring the FET.

As used herein, and unless otherwise specified, the term "reference electrode" refers to an electrode that has a stable and well-defined electrochemical potential. It may be used as a reference point for the measurement or control of the potential the gate of a FET in a gate driver system in accordance with embodiments of the present invention. The reference electrode is typically used in electrochemical applications to ensure accurate voltage measurements and control. Examples of specific embodiments of reference electrodes include standard hydrogen electrodes, silver/silver chloride (Ag/AgCI) electrodes, and calomel electrodes, among others. Any electrode which provides a stable reference voltage may be used.

An "Ag/AgCI reference electrode" may comprise a silver wire coated with silver chloride. It is suitable as reference electrode due to its stable and well-defined potential. The Ag/AgCI electrode is often used in conjunction with a salt bridge or electrolyte solution to maintain its potential during use.

As used herein, and unless otherwise specified, the term "graphene field-effect transistor (GFET)" refers to a field-effect transistor that utilizes graphene as the channel material through which current flows. Graphene is a single layer of carbon atoms arranged in a two-dimensional honeycomb lattice, known for its exceptional electrical, thermal, and mechanical properties. GFETs leverage the high electron mobility of graphene to achieve high-speed operation and sensitivity, making them suitable for a wide range of applications, including high-frequency electronics and biosensors. Examples of specific embodiments of GFETs include GFET-based sensors for detecting biological molecules, GFETs for high-speed digital circuits, and GFETs for flexible electronics.

As used herein, and unless otherwise specified, the term "biosensing system" refers to a system designed to detect the presence or concentration of biological substances in a fluid. The system typically includes a sensor element that interacts with the substance to produce a measurable response, such as a change in electrical properties, and a control device that interprets this response to determine the characteristics of the substance. Examples of specific embodiments of biosensing systems include glucose monitors for diabetic care, DNA sensors for genetic testing, DNA sequences of viruses, cortisol, and immunoassays for detecting pathogens or biomarkers.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

The present invention relates to a gate driver system (100) and a biosensing system (200) that utilize field-effect transistors (FETs) (110) for detecting substances in a fluid (170) and methods (300) for driving and regulating gate voltages of such transistors. The invention encompasses several aspects and embodiments, each designed to improve the precision, integration, and response time of the gate voltage control in contact with a liquid environment.

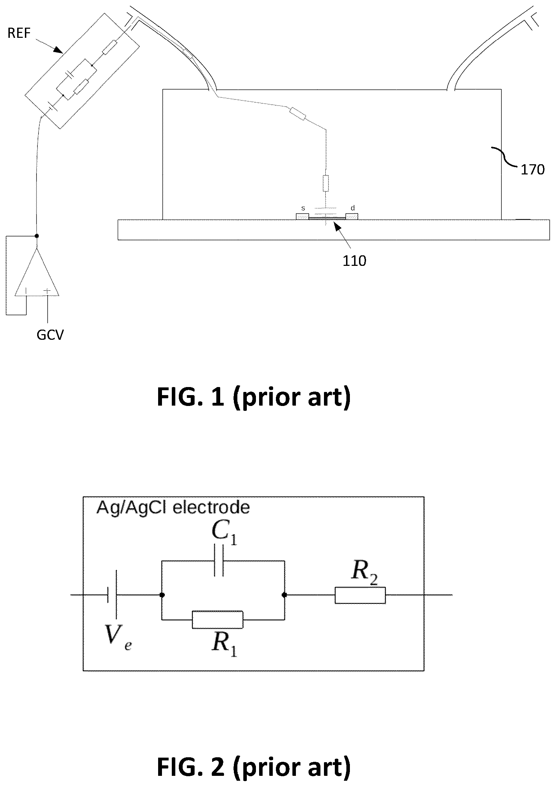

In FIG. 1 a schematic drawing of a prior art gate driver system is shown wherein an external reference electrode controls the liquid gate voltage of a FET (110). The reference electrode, typically an Ag/AgCI electrode, provides a stable chemical potential for electrochemical measurements. In this example the voltage source for applying the gate control voltage (GCV) is represented by the amplifier. It is understood that different voltage sources may be used. The output of the reference electrode is in contact with the liquid in the microfluidic cell. The reference electrode can be modelled by an electric circuit including the chemical potential Ve of the electrode and resistive and capacitive effects as shown in FIG. 2. In this model C1 may for example be 0.53 nF, R1 may for example be 30 kΩ and R2 may for example be 500 Ω. Due to the significant series resistance of the liquid and the reference electrode, and the FET (110) having a significant double-layer capacitance the frequency at which the gate voltage of the FET can be modulated is limited. In embodiments of the present invention the FET may be a GFET. In embodiments of the present invention the gate dimension of the GFET may be 100 µm × 100 µm. The GFET for example have a gate capacitance of 2 nF. The theory for the double layer capacitance and how it can be measured is for instance described in Ulibarri, A. (2018). Measuring the Double Layer Capacitance of Electrolyte Solutions U.pdf [Senior Theses, Linfield College].

Depending on the application, there are several liquids possible, what leads then also to a big variety of resistances. As examples may serve: DI water: 18 MOhm cm, distilled water: 0.3 MOhm cm to 2 MOhm cm. Phosphate buffered saline (PBS)X0.01: 5 kOhm cm, wherein 0.01 refers to a 100-fold dilution of PBSx1. The settling of the voltage at the graphene surface, when the gate control voltage is varied, is ruled by the time constant resulting from the combination of the GFET capacitance and the overall resistance. This sets an upper limit to the gate-source voltage modulation frequency as e.g. the following example might show. For PBS x 0.01 and one single 100 µm × 100 µm GFET electrically connected (with no common source connection to other GFETs of a GFET matrix), and short hose between the Ag/AgCI probe, the GFET might be operated at 100Hz modulation frequency with 20mV gate control voltage modulation amplitude (40mVpp). It should be noted, that the amount of modulation reaching the GFET is proportional to the applied gate control voltage modulation, thus the GFET could be operated at maybe 500Hz with 100 mV modulation amplitude.

It is an object of embodiments of the present invention to increase the maximum frequency limit at which the gate of the FET can be modulated.

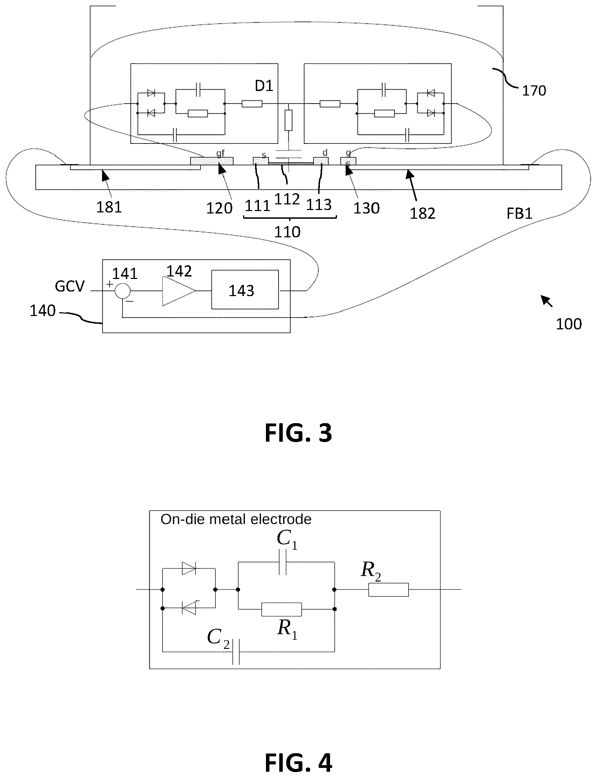

In a first aspect embodiments of the present invention relate to a gate driver system (100) for driving a gate (112) of a field-effect transistor (110) in contact with a liquid (170). Exemplary embodiments of such a gate driver system are schematically drawn in FIG. 3, FIG. 5, FIG. 6, FIG. 7, FIG. 8 and FIG. 9. The gate driver system (100) includes the field-effect transistor (110) itself, which comprises the gate (112), and a source (111) and a drain (113) for biasing the transistor. A first drive electrode (120), is configured for applying a first driving signal (D1) to obtain a voltage at the gate (112). A first sense electrode (130) is configured for measuring this voltage, thereby obtaining a first feedback signal (FB1) indicative of the voltage at the gate (112). The first drive electrode (120) and/or the first sense electrode (130) is an on-chip metal electrode. A feedback control system (140) is then used for regulating the voltage at the gate (112) by controlling the first drive electrode (120) using the first feedback signal. The feedback control system (140) may include elements (143) to improve loop stability, such as offset compensation. In the exemplary embodiment illustrated in FIG. 3 a feedback voltage (FB1) is subtracted from a gate control voltage (GCV) by a subtractor (141) and the result is input to an amplifier 142. The output of the amplifier may be fed to an optional loop compensation module to improve loop stability. In the exemplary embodiment illustrated in FIG. 3 the output of the feedback control system is connected to the first drive electrode (120) by means of an on-die metal electrode contact (181). The output (FB1) of the sense electrode (130) is connected to the feedback control system (140) by means of an on-die metal electrode contact (182).

The first driving electrode (120) and the first sensing electrode (130) may be on-chip metal electrodes, as depicted in FIG. 3, which shows a schematic drawing of a gate driver system with on-chip metal electrodes used to apply and measure the gate voltage.

The on-chip metal electrode, same as the reference electrode, can be modeled by an electrical circuit including the double-layer capacitance and faradaic conduction occurring when the voltage reaches chemical potentials of redox reactions occurring at the electrode. This effect can be modeled by e.g. diodes. Thus a model according FIG. 4 can be derived and is applied to the configuration of FIG. 3 with the on chip / on die metal electrode. In this model C1 may for example be 200 nF, R1 may for example be 800 Ω, R2 may for example be 20 kΩ, and C2 may for example be 2 nF.

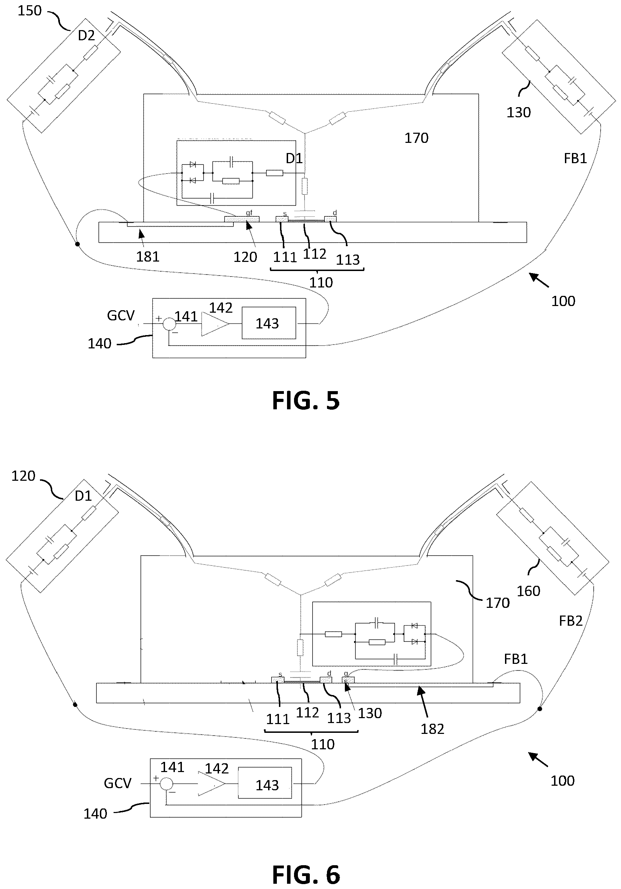

In some embodiments, the gate driver system (100) may include a first drive electrode (120), which is an on-chip metal electrode, for applying a first drive signal (D1) to obtain a voltage at the gate (112) and a second drive electrode (150), which is a reference electrode, for applying a second drive signal (D2) to obtain a voltage at the gate (112). The feedback control system (140) is configured to control both the first drive electrode (120), via on-die metal electrode contact (181), for generating a first drive signal (D1) and the second drive electrodes (150) for generating a second drive signal (D2) for regulating the voltage at the gate (112), as shown in FIG. 5. This configuration combines the benefits of an on-chip metal electrode resulting in increased dynamics with the stable chemical potential provided by a reference electrode. The maximum frequency limit for gate-source voltage modulation can be increased by combining a reference electrode with an on-chip electrode, adding a higher frequency path to the gate of the FET (110). In the exemplary embodiment illustrated in FIG. 5 the first sense electrode (130) is a reference electrode and generates a feedback signal (FB1) which is indicative for the gate voltage. An exemplary model of a reference electrode is shown in FIG. 2 which represents the impedance characteristics of a reference electrode when immersed in a liquid.

In the embodiment illustrated in FIG. 6 the gate driver system (100) comprises a first driver electrode (120) which is a reference electrode, a first sense electrode (130) which is an on-chip metal electrode, and a second sense electrode (160) which is a reference electrode. The first feedback signal (FB1) of the first sense electrode and the second feedback signal (FB2) of the second reference electrode are used as feedback signals for the feedback control system (140) for regulating the voltage at the gate by controlling the first driver electrode (120). By using the first sense electrode which is an on-chip metal electrode and the second reference electrode which is a reference electrode a stable feedback loop is obtained which moreover has an increased maximum frequency limit compared to gate driver system which does not comprise an on-chip metal electrode.

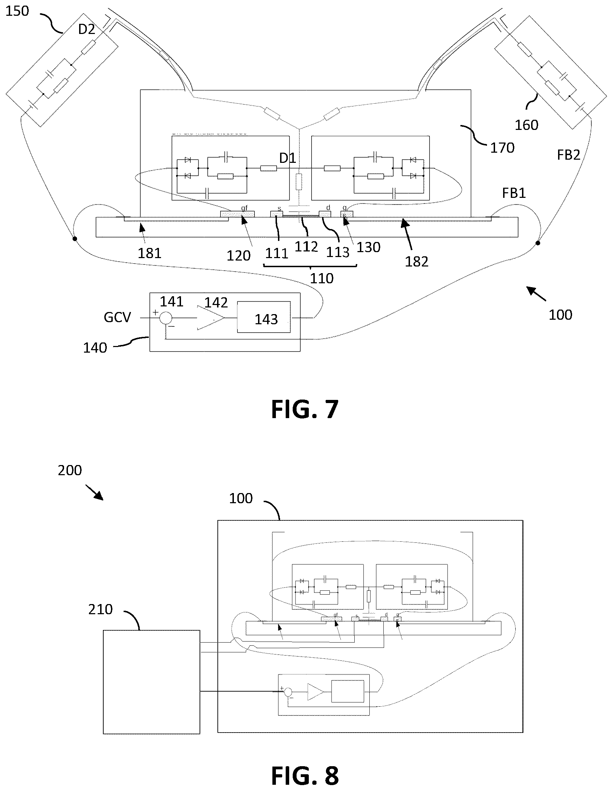

Further embodiments may comprise a first drive electrode (120), which is an on-chip metal electrode, for applying a first drive signal (D1) to obtain a voltage at the gate (112) and a second drive electrode (150), which is a reference electrode, for applying a second drive signal (D2) to obtain a voltage at the gate (112), a first sense electrode (130), which is an on-chip metal electrode, for obtaining a first feedback signal (FB1) indicative of the voltage at the gate (112) a second sense electrode (160), which is a reference electrode, for obtaining a second feedback signal (FB2) indicative of the voltage at the gate (112). The feedback control system (140) uses both feedback signals (FB1, FB2) for regulating the voltage to a gate control voltage (GCV) which is applied at the input of the feedback control system (140). This is illustrated in FIG. 7, The feedback signal for regulating the gate voltage is a combination of a first feedback signal (FB1) from the first sense electrode (130) and a second feedback signal (FB2) from the second sense electrode (160).

In embodiments of the present invention the output (FB1) of the sense electrode (130) may be connected to the feedback control system (140) by means of an on-die metal electrode contact (182). In embodiments of the present invention the output of the feedback control system may be connected to the first drive electrode (120) by means of an on-die metal electrode contact (181).

In some embodiments, the reference electrodes may be Ag/AgCI electrodes, known for their chemical stability. The field-effect transistor (110) may be a graphene field-effect transistor (GFET), leveraging the unique properties of graphene for sensitive and responsive gate control.

The second aspect of the invention relates to a biosensing system (200) for detecting a substance in a liquid (170). An schematic drawing of such a biosensing system (200) is shown in FIG. 8. This system incorporates a gate driver system (100) according to any of the embodiments of the first aspect. The gate (112) of the FET (110) is sensitive to the substance, and the biosensing system (200) includes a control device (210) for regulating the voltage at the gate (112) using the gate driver system (100) and for determining a characteristic of the FET (110) for detecting the substance. The biosensing system (200) may include a microfluidic cell that comprises the FET (110) and a liquid carrying substances to be measured. The liquid (170) has a limited conductivity, with examples provided for different types of water and solutions.

The control device (210) may for example be configured for modulating the voltage at the gate of the FET by providing a modulating voltage as gate control voltage as input to the feedback control system (140). The control device (210) may for example be configured for modulating the gate voltage of the FET (e.g. with reference to the source or to the ground), applying a drain source voltage to the FET and measure the drain source current of the FET. The gate voltage may for example be modulated by toggling between plus and minus a predefined bias voltage around a given bias point. The drain source current in function of the gate voltage or any specific feature thereof may be a characteristic feature of the FET which may be used for detecting the substance. Detecting the substance may also imply determining a quantity of the substance. The FET may be a GFET and the control device may be configured for determining the Dirac voltage of the GFET. In embodiments of the present invention the control device may be a processing device. The control device and the feedback control system may be realized under use of a CMOS semiconductor technology in an integrated circuit. The FET (e.g. GFET) and the on-chip metal electrodes may be arranged on the surface, as the on-chip metal electrodes are compatible to the CMOS semiconductor technology.

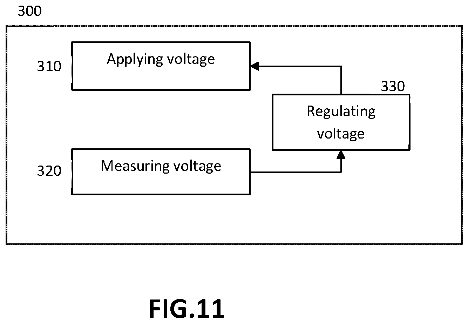

The third aspect of the invention is a method (300) for driving and regulating a gate voltage of a FET (110) in contact with a liquid (170). An exemplary flow chart of such a method is shown in FIG. 11. The method involves applying (310) a first driving signal (D1) using a first drive electrode (120), measuring (320) the voltage at the gate (112) with a first sense electrode (130) to obtain a first feedback signal (FB1), and regulating (330) the applied voltage using a feedback control system (140) based on the first feedback signal (FB1). The first drive electrode and/or the first sense electrode is an on-chip metal electrode. The method may include using a second drive electrode (150) for applying a second driving signal (D2) and a second sense electrode (160) to obtain a second feedback signal (FB2), for enhanced feedback and voltage regulation. The applied first and/or second driving signals may be modulated to improve driving, sensing and control of the gate voltage. The gate voltage of the FET may be modulated to improve sensing, with a need for a small time constant to allow higher frequency modulation. The time constant of the sensing system is affected by leakages, resistances, and capacitances of the electrodes, the liquid, and the FET construction. The maximum frequency limit can be further increased by actively driving the gate voltage using force/sense electrodes, which are on-chip metal electrodes. The stability of the gate voltage can be improved by additionally providing a reference electrode for providing a driving signal. The stability of the sensing of the gate voltage can be improved by additionally providing a reference electrode for providing a feedback signal.

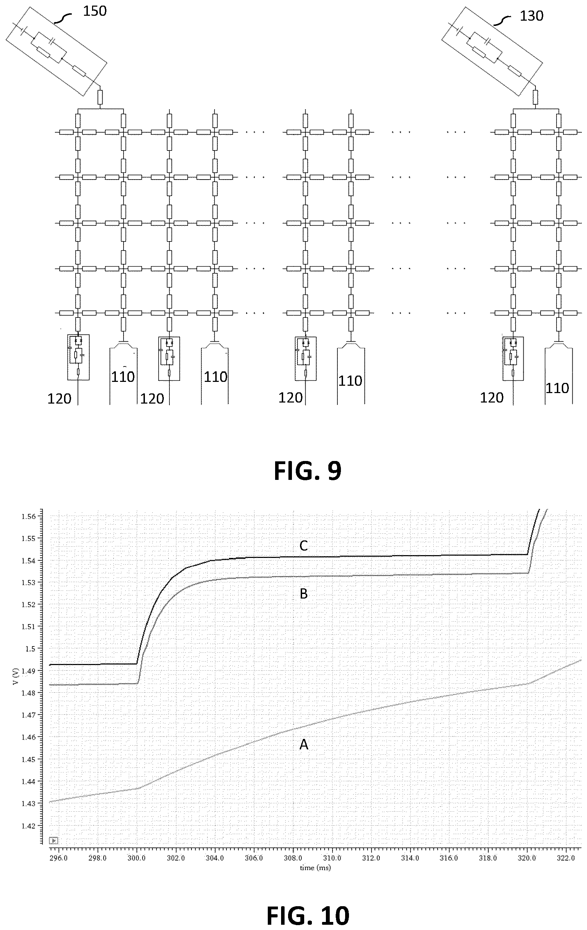

FIG. 9 shows a simulation model of an array of 256 GFETs with distributed on-chip gate electrodes. The gates of the GFETs are driven using a gate driver system in accordance with embodiments of the present invention. The gate complex of the GFET may be made sensitive to substances by applying one or more sensitive layers such as a graphene layer, also combined with may be additional layers for functionalizing the Graphene layer further to be sensitive to specific substances. The applied voltages on gate, source, and drain of the GFETs are referenced to ground.

In embodiments of the present invention the liquid within the microfluidic cell, carrying the substances to be measured, adds resistances and capacitances to the system. The resistance of a cube of liquid (100 µm side length) would be 500kOhm (conductivity of PBS × 0.01).

In embodiments of the present invention on-chip metal electrodes alongside the GFET are used to regulate the gate voltage of the GFET. In FIG. 9 on-chip drive electrodes 120 are alternating with GFETs 110. A typical distance between an on chip electrode and a GFET gate might range from 5 µm till 100 µm and is mainly determined by layout rules of the manufacturing process. As materials for the on chip electrodes e.g. Pt and Au might be used, but also other CMOS compatible metals might be suitable, that have a good chemical resistance for the used liquid based chemistry. As described already earlier, GFETs have e.g. 1 nF capacitance between the gate and the source and e.g. 1 nF between the gate and the drain, thus 2 nF in total. The resistance from the Ag/AgCI probes to the microfluidic cell is 5 mOhm with the probe connected to the microfluidic cell through a 1 cm long and 0.5 mm diameter wide hose. The Ag/AgCI electrodes may for example be used as sense electrode 130 or as drive electrode 150.

FIG. 10 shows simulation results of various gate driving methods.

Trace A displays the gate voltage in function of time when driving the gate of the FET using a prior art passive gate driver system through an Ag/AgCI electrode in the liquid which is in contact with the gate.

Trace B shows the gate voltage in function of time when driving the gate using a gate driver system in accordance with an embodiment of the present invention which comprises a first driver electrode which is an Ag/AgCI reference electrode and with feedback taken at a first sense electrode which is an on-chip metal electrode and at a second sense electrode which is an Ag/AgCI reference electrode as illustrated in FIG. 6.

Trace C shows the gate voltage in function of time when driving the gate using a gate driver system in accordance with an embodiment of the present invention which comprises a first driver electrode which is an on-chip metal electrode and second driver electrode which is an Ag/AgCI electrode with feedback taken at a first sense electrode which is an on-chip metal electrode and with feedback taken at a second sense electrode which is an Ag/AgCI electrode as illustrated in FIG. 7. This is the preferred embodiment, resulting in faster settling times for a FET-based sensor (e.g. GFET-based sensor).

It is an advantage that the gate voltage of the FET settles faster when using a gate driver system or method in accordance with embodiments of the present invention. When using a gate driver system in accordance with embodiments of the present invention for modulating the gate voltage, it is advantageous that the modulation frequency can be increased by a factor 5 to 10 in comparison with a prior art gate driver. This improvement is attributed to the reduced resistance and parasitic capacitances when using on-chip electrodes.

It is an advantage of embodiments of the present invention that the feedback control system allows to obtain a stable voltage at the gate of the FET. This feedback control system may include elements for loop stability and offset compensation.

In embodiments of the present invention the FET is housed in a microfluidic cell which contains the liquid with substances to be measured.

It is to be understood that although preferred embodiments, specific constructions and configurations, as well as materials, have been discussed herein for devices according to the present invention, various changes or modifications in form and detail may be made without departing from the scope of this invention. Functionality may be added or deleted from the block diagrams and operations may be interchanged among functional blocks. Steps may be added or deleted to methods described within the scope of the present invention.

## Claims

1. A gate driver system (100) for driving a gate (112) of a field-effect transistor (110) in contact with a liquid (170), the gate driver system (100) comprising:
- the field-effect transistor (110), wherein the field-effect transistor (110) comprises the gate (112), and a source (111) and a drain (113) for biasing the field-effect transistor (110),
- a first drive electrode (120) configured for applying a first driving signal to obtain a voltage at the gate (112),
- a first sense electrode (130) configured for measuring the voltage at the gate (112) thereby obtaining a first feedback signal indicative of the voltage at the gate (112),
- wherein the first drive electrode (120) and/or the first sense electrode (130) is an on-chip metal electrode,
- a feedback control system (140) for regulating the voltage at the gate (112) by controlling the first drive electrode (120) using the first feedback signal.

2. The gate driver system (100) according to claim 1, wherein the first drive electrode (120) is an on-chip metal electrode and the gate driver system comprises a second drive electrode (150) configured for applying a second drive signal to obtain a voltage at the gate (112), wherein the second drive electrode (150) is a reference electrode and wherein the feedback control system (140) is configured for also controlling the second drive electrode (150) for regulating the voltage at the gate (112).

3. The gate driver system (100) according to any one of the previous claims, the gate driver system comprising a second sense electrode (160), configured for measuring the voltage at the gate (112) thereby obtaining a second feedback signal indicative of the voltage at the gate (112), wherein the feedback control system (140) is configured for also using the second feedback signal for regulating the voltage at the gate (112).

4. The gate driver system (100) according to claim 3, wherein the first sense electrode (130) or the second sense electrode (160) is an on-chip metal electrode.

5. The gate driver system (100) according to any of the claims 3 or 4, wherein the first sense electrode (130) or the second sense electrode (160) is a reference electrode.

6. The gate driver system (100) according to any of the claims 2 or 5, wherein one or more of the reference electrodes is an Ag/AgCI electrode.

7. The gate driver system (100) according to any one of the preceding claims, wherein the field-effect transistor (110) is a graphene field-effect transistor (GFET).

8. A biosensing system (200) for detecting a substance in a liquid (170), the biosensing system (200) comprising a gate driver system (100) according to any of the previous claims, wherein the gate (112) of the field-effect transistor (112) is sensitive to the substance, and wherein the biosensing system (200) comprises a control device (210) which is configured for regulating the voltage at the gate (112) of the field-effect transistor (110) using the gate driver system (100) and which is configured for determining a characteristic of the field-effect transistor (112) for detecting the substance.

9. A method (300) for driving and regulating a gate voltage of a field-effect transistor (110) in contact with a liquid (170), the method comprising:
- applying (310) a first driving signal to obtain a voltage at the gate (112) of the field-effect transistor (110) using a first drive electrode (120),
- measuring (320) the voltage at the gate (112) with a first sense electrode (130) to obtain a first feedback signal indicative of the voltage at the gate (112),
- wherein the first drive electrode (120) and/or the first sense electrode (130) is an on-chip metal electrode,
- wherein the applied voltage is regulated (330) using a feedback control system (140) based on the first feedback signal.

10. The method (300) according to claim 9, wherein the first drive electrode (120) which is used is an on-chip metal electrode and wherein the step of applying (310) the voltage includes using a second drive electrode (150) for applying a second drive signal to obtain a voltage at the gate (112) wherein the second drive electrode is a reference electrode.

11. The method (300) according to claim 9 or 10, wherein the step of measuring the voltage at the gate (112) includes using a second sense electrode (160) to obtain a second feedback signal indicative of the voltage at the gate (112), wherein the applied voltage is regulated (330) using the feedback control system (140) which is also using the second feedback signal.

12. The method (300) according to claim 11, wherein the first sense electrode (130) or the second sense electrode (160) is an on-chip metal electrode.

13. The method (300) according to any one of claims 9 to 12, wherein the first sense electrode (130) or the second sense electrode (160) is a reference electrode.

14. The method (300) according to any one of claims 9 to 13, wherein the field-effect transistor is a graphene field-effect transistor (GFET).

15. The method (300) according to any one of claims 9 to 14, wherein the applied first driving signal and/or second driving signal is modulated.
